# EUROPEAN PATENT APPLICATION

(11) **EP 2 520 831 A1**
(43) Date of publication of application: **07.11.2012**
(21) Application number: 09852802.9
(22) Date of filing: 28.12.2009
(51) Int. Cl.: F16H 55/12

(54) **GEAR PLATE**

(71) Applicant: Toyota Jidosha Kabushiki Kaisha, Toyota-shi, Aichi 471-8571 (JP)
(72) Inventor: SUGIMURA, Kazuaki, Toyota-shi Aichi 471-8571 (JP)
(74) Representative: Intès, Didier Gérard André
(86) International application number: PCT/JP2009/071761
(87) International publication number: WO 2011/080824

(57) **Abstract**

A gear plate is provided with a substantially disc-shaped inner race (1), a flange section (20) formed on the outer peripheral edge of the inner race (1) and bent in an L-shape, and a ring gear (3) fixed to the outer periphery of the flange section (20) by press fitting or shrink fitting. In the gear plate, the flange section (20) is formed such that the outer diameter and the thickness of the outer periphery of the flange section (20) increase from a bend section (20a) toward the tip section (20b) thereof. The configuration optimally suppresses non-uniform deformation of the ring gear (3) utilizing both a reduction in the difference of rigidity of the flange section (2) in the axial direction and an imbalance of the amount of interference allowance of the press fitting of the ring gear (3).

## Description

### TECHNICAL FIELD

The present invention relates to a gear plate having a substantially disk-like plate, a flange portion that is bent in an L shape and formed along the outer peripheral edge of the plate, and an annular ring gear fixed to the outer circumference of the flange portion of the plate through press fitting or shrink fitting.

### BACKGROUND ART

As an engine starting mechanism for a vehicle, a constant-mesh gear starting mechanism is known, as described in Patent Document 1. In this type of starting mechanism, a ring gear sub-assembly, which is a gear plate connected to an engine crankshaft, is constantly meshed with a pinion gear for a starter motor. The ring gear sub-assembly thus receives rotating force from the starter motor through the pinion gear. This rotates the ring gear sub-assembly and the engine crankshaft.

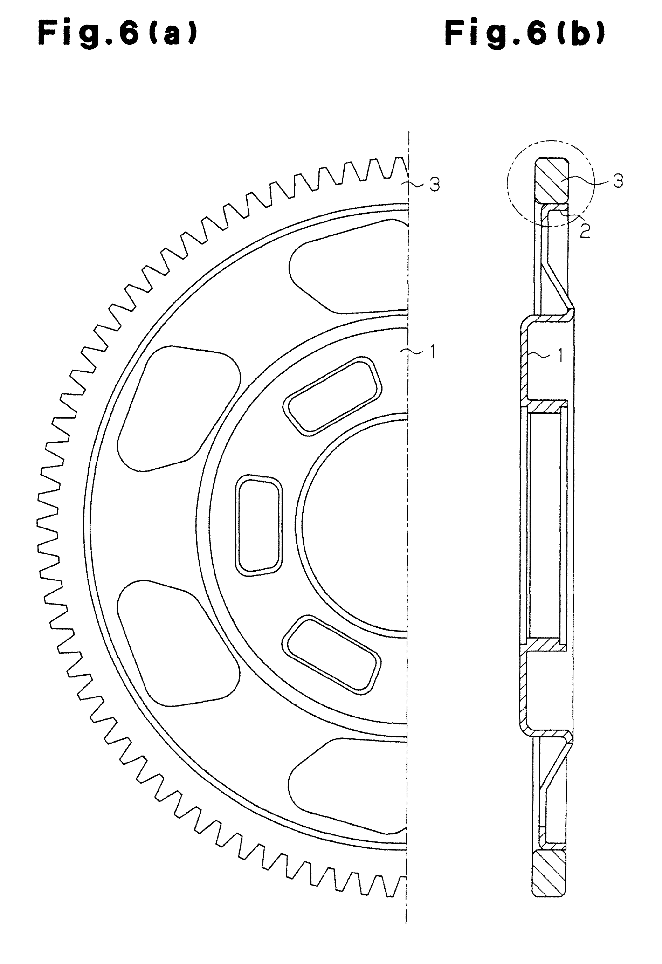

Fig. 6(a) is a plan view showing the configuration of the ring gear sub-assembly in the constant-mesh gear starting mechanism. Fig. 6(b) is a cross-sectional side view showing the configuration of the ring gear sub-assembly. As illustrated in the drawings, the ring gear sub-assembly includes an inner race 1, a flange portion 2, and an annular ring gear 3. The inner race 1 is a substantially disk-like plate. The flange portion 2 is formed along the outer peripheral edge of the inner race 1. The ring gear 3 is fixed to the outer circumference of the flange portion 2 through arc welding.

### PRIOR ART DOCUMENT

### Patent Document

Patent Document 1: Japanese Laid-Open Patent Publication No. 2007-126999

### SUMMARY OF THE INVENTION

### Problems that the Invention is to Solve

If the ring gear 3 is fixed to the inner race 1 through arc welding, heat produced through welding may decrease the hardness of the gear or cause deformation of the gear. Also, the welding may be difficult when certain materials are used for the inner race 1 or the ring gear 3. To solve this problem, it has been proposed to fix the ring gear 3 to the inner race 1 through press fitting or shrink fitting.

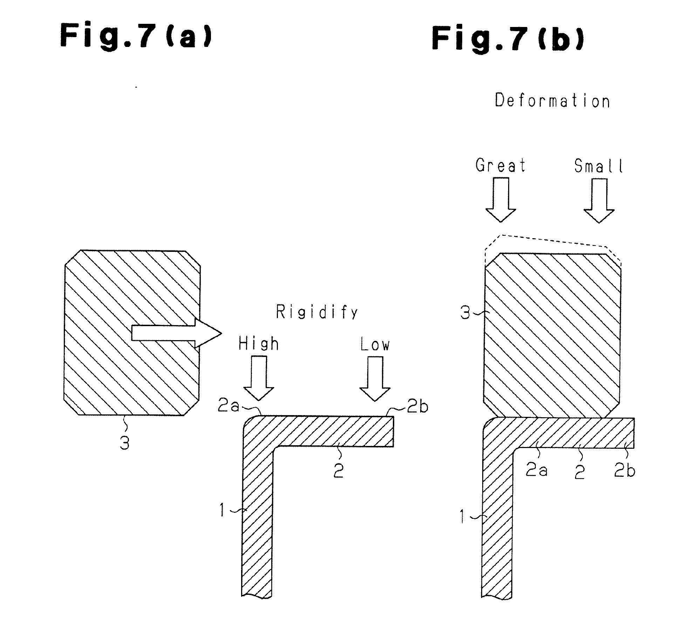

Fig. 7(a) is an enlarged view showing an outer peripheral portion of the inner race 1, which is indicated in the double-dashed circle in Fig. 6(b). As shown in Fig. 7(a), the outer peripheral portion of the inner race 1 is bent in an L shape, thus forming the flange portion 2.

In a case in which the ring gear 3 is fixed to the outer circumference of the flange portion 2 through press fitting or shrink fitting, the rigidity of the flange portion 2 against an inwardly directed radial force may vary between the bent portion and the distal portion. Specifically, a bent portion 2a of the flange portion 2 has high rigidity and a distal portion 2b of the flange portion 2 has low rigidity against such a radial force. Accordingly, as illustrated in Fig. 7(b), the deformation amount of the ring gear 3 depending on press-fitting interference allowance varies in the axial direction of the ring gear 3. Specifically, the deformation amount of the ring gear 3 is great at the side corresponding to the bent portion of the flange portion 2 and small at the side corresponding to the distal portion of the flange portion 2. As a result, the ring gear 3 is deformed unevenly as indicated by the broken lines in Fig. 7(b), thus causing a problem in meshing.

This problem may happen not only in the ring gear sub-assembly of the constant-mesh gear starting mechanism but also in a drive plate that is mounted in an engine crankshaft to transmit engine power to a transmission. In other words, the problem is common in gear plates having a substantially disk-like plate with a flange portion that is bent in an L shape and formed around the outer peripheral edge of the plate and in which an annular ring gear is fixed to the outer circumference of the flange portion of the plate through press fitting or shrink fitting.

Accordingly, it is an objective of the present invention to provide a gear plate that reliably prevents uneven deformation of a ring gear.

### Means for Solving the Problems

To achieve the foregoing objective, a gear plate according to the present invention includes a substantially disk-like plate, a flange portion formed along an outer peripheral edge of the plate to be bent in an L shape, and an annular ring gear fixed to an outer circumference of the flange portion through press fitting or shrink fitting. The flange portion is shaped such that the thickness of the flange portion becomes greater from a bent portion toward a distal portion of the flange portion.

In the gear plate, the thickness of the flange portion becomes greater from the bent portion toward the distal portion. This decreases difference in rigidity between the bent portion and the distal portion of the flange portion. As a result, the gear plate according to the invention prevents uneven deformation of the ring gear in a preferred manner.

The flange portion of the gear plate according to the invention may be shaped in a tapered manner or a stepped manner.

By setting the outer diameter of the flange portion to become greater from the bent portion toward the distal portion, the press fitting interference allowance of the ring gear is equalized in the axial direction. This decreases difference in the press-fitting interference allowance of the ring gear in the axial direction, thus preventing uneven deformation of the ring gear in a further preferred manner.

The gear plate according to the invention may be shaped such that the outer diameter of the flange portion becomes uniform in the axial direction of the plate. In this case, by canceling the difference in rigidity of the flange portion in the axial direction, uneven deformation of the ring gear is prevented.

To achieve the foregoing objective, another gear plate according to the present invention includes a substantially disk-like plate, a flange portion formed along an outer peripheral edge of the plate to be bent in an L shape, and an annular ring gear fixed to an outer circumference of the flange portion through press fitting or shrink fitting. The flange portion is shaped such that the outer diameter of the flange portion becomes greater from a bent portion toward a distal portion of the flange portion.

In the gear plate, the outer diameter of the flange portion becomes greater from the bent portion toward the distal portion. This improves the balance between the press fitting interference allowance of the ring gear and the distribution of rigidity in the flange portion with respect to the bent portion and the distal portion of the flange portion. As a result, uneven deformation of the ring gear is prevented in a preferred manner.

The flange portion of the gear plate according to the invention may be shaped in a tapered manner or a stepped manner.

The gear plate according to the invention is employable as a ring gear sub-assembly for a constant-mesh gear starting mechanism that is mounted in an engine crankshaft and meshed with a pinion gear of a starter motor or a drive plate that is arranged in an engine crankshaft to transmit engine power to a transmission.

### BRIEF DESCRIPTION OF THE DRAWINGS

Fig. 1 (a) is a cross-sectional view showing the configuration of a flange portion and the vicinity of the flange portion for a gear plate according to a first embodiment of the present invention before a ring gear is press-fitted;
Fig. 1 (b) is a cross-sectional view showing the configuration of the flange portion and the vicinity of the flange portion after the ring gear is press-fitted;
Fig. 2 is a cross-sectional view showing the configuration of a flange portion and the vicinity of the flange portion according to a second embodiment of the invention before a ring gear is press-fitted;
Fig. 3(a) is an enlarged cross-sectional showing the configuration of a flange portion of Modification 1;
Fig. 3(b) is an enlarged cross-sectional view showing the configuration of a flange portion of Modification 2;
Fig. 4(a) is an enlarged cross-sectional view showing the configuration of a flange portion of Modification 3;
Fig. 4(b) is an enlarged cross-sectional view showing the configuration of a flange portion of Modification 4;
Fig. 5(a) is an enlarged cross-sectional view showing the configuration of a flange portion of Modification 5;
Fig. 5(b) is an enlarged cross-sectional view showing the configuration of a flange portion of Modification 6;
Fig. 6(a) is a plan view showing the configuration of a gear plate formed as a ring gear sub-assembly for a constant-mesh gear starting mechanism;
Fig. 6(b) is a cross-sectional side view showing the configuration of the gear plate illustrated in Fig. 6(b);
Fig. 7(a) is a cross-sectional view showing the configuration of a flange portion and the vicinity of the flange portion for a conventional gear plate formed as a ring gear sub-assembly for a constant-meshed gear mechanism before a ring gear is press-fitted; and
Fig. 7(b) is a cross-sectional view showing the configuration of the flange portion and the vicinity of the flange portion after the ring gear is press-fitted.

### MODES FOR CARRYING OUT THE INVENTION

### (First Embodiment)

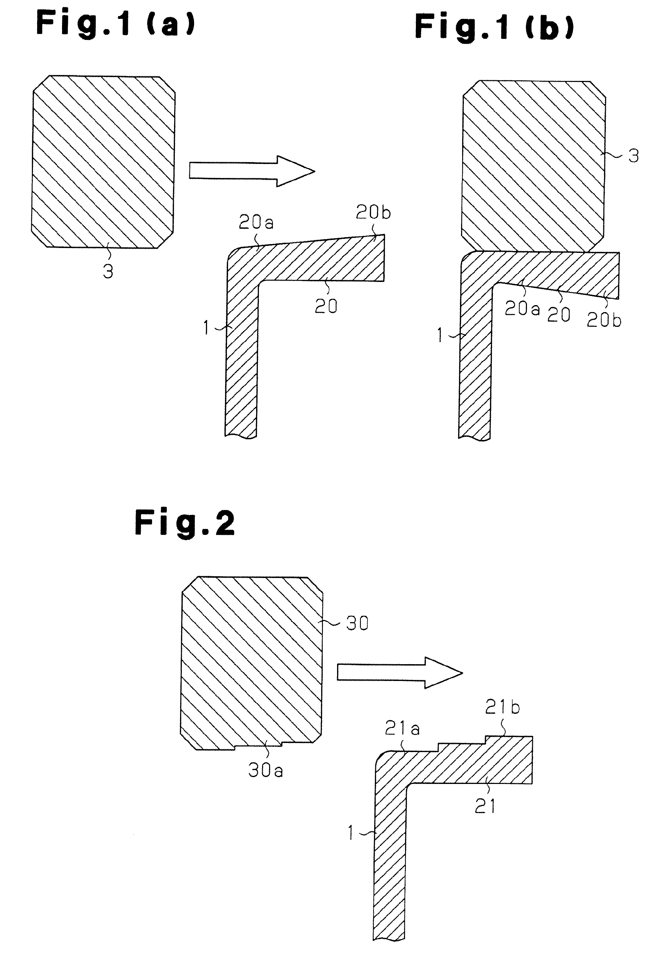

A first embodiment of a gear plate according to the present invention will now be described with reference to Fig. 1. The gear plate of the first embodiment is employed as a ring gear sub-assembly for a constant-meshed gear starting mechanism.

The gear plate of the first embodiment is configured identically with the conventional gear plate illustrated in Fig. 6 except for the shape of the flange portion of the inner race. Specifically, the gear plate of the first embodiment has an inner race 1, which is a substantially disk-like plate. A flange portion bent in an L shape with respect to an inner race body (a plate body) is formed along the outer peripheral edge of the inner race 1. An annular ring gear 3 is fixed to the outer circumference of the flange portion through press fitting or shrink fitting.

Fig. 1 (a) is a cross-sectional view showing the configuration of a flange portion 20 and the vicinity of the flange portion 20 for the gear plate of the first embodiment in a state before the ring gear is press-fitted. As shown in the drawing, in the gear plate of the first embodiment, the outer peripheral surface of the flange portion 20 is inclined with respect to the axis of the inner race 1, thus forming a tapered shape. More specifically, the outer diameter of the flange portion 20 becomes greater from a bent portion 20a toward a distal portion 20b of the flange portion 20. In contrast, the inner diameter of the flange portion 20 is uniform in the axial direction of the inner race 1. As a result, the thickness of the flange portion 20 becomes gradually greater from the bent portion 20a toward the distal portion 20b. The inner race 1 is shaped in a tapered manner by subjecting the outer circumference of the flange portion 20 to lathe turning after pressing.

In the gear plate of the first embodiment, the outer diameter of the flange portion 20 becomes greater from the bent portion 20a toward the distal portion 20b. This decreases the press-fitting interference allowance in the bent portion 20a, where the press-fitting interference allowance is originally great and increases the press-fitting interference allowance in the distal portion 20b. As a result, the axial difference in gear deformation in the flange portion 20 depending on the press-fitting interference allowance is reduced.

Also, in the gear plate of the first embodiment, the thickness of the flange portion 20 becomes greater from the bent portion 20a toward the distal portion 20b. This decreases the difference in rigidity between the bent portion 20a and the distal portion 20b.
(1) The gear plate of the first embodiment has a substantially disk-like inner race 1, the flange portion 20, which is formed along the outer circumference of the inner race 1 and bent in an L shape, and the annular ring gear 3, which is fixed to the outer circumference of the flange portion 20 through press fitting or shrink fitting. The flange portion 20 is shaped such that the thickness of the flange portion 20 becomes greater from the bent portion 20a toward the distal portion 20b. This decreases the axial difference in rigidity in the flange portion 20, thus preventing uneven deformation of the ring gear 3 in a preferred manner.
(2) In the first embodiment, the outer diameter of the flange portion 20 becomes greater from the bent portion 20a toward the distal portion 20b. As a result, using the axial difference in press-fitting interference allowance in the ring gear 3, uneven deformation of the ring gear 3 is prevented in a further preferred manner.
(3) In the first embodiment, the inner diameter of the flange portion 20 is axially uniform. As a result, the inner race 1 is manufactured simply through pressing except for machining of the outer circumference of the flange portion 20. Specifically, the outer circumference of the flange portion 20 must be machined even in a case in which the ring gear 3 is fixed to the inner race 1 through arc welding. In other words, the gear plate is manufactured simply by performing the same steps as those employed in conventional cases.

### (Second Embodiment)

A second embodiment of a gear plate according to the present invention will hereafter be described in detail with reference to Fig. 2. The gear plate of the second embodiment has a flange portion shaped differently from the flange portion of the gear plate according to the first embodiment.

Fig. 2 is a cross-sectional view showing the configuration of a flange portion 21 and the vicinity of the flange portion 21 for the gear plate of the second embodiment. As shown in the drawing, in the gear plate of the second embodiment, the outer peripheral surface of the flange portion 21 has a stepped shape. In other words, the outer diameter of the flange portion 21 becomes greater in a stepped manner from a bent portion 21 a toward a distal portion 21 b. The inner diameter of the flange portion 21 is uniform in the axial direction. As a result, the thickness of the flange portion 21 becomes greater in a stepped manner from the bent portion 21 a toward the distal portion 21 b.

An inner peripheral surface 30a of a ring gear 30, which is fixed to the outer circumference of the flange portion 21 through press fitting or shrink fitting, has a stepped shape. Specifically, the inner diameter of the ring gear 30 becomes greater in a stepped manner from a position facing the bent portion 21a of the flange portion 21 toward a position facing the distal portion 21 b of the flange portion 21. However, the height of each step in the inner peripheral surface 30a of the ring gear 30 is smaller than the height of each step in the outer circumference of the flange portion 21.

In the gear plate of the second embodiment, the outer diameter of the flange portion 21 is adjusted for each of the steps from the bent portion 21 a toward the distal portion 21 b to set press-fitting interference allowance of the ring gear 3 in the axial direction in a preferred manner. Also, in the gear plate of the second embodiment, the thickness of the flange portion 21 becomes greater from the bent portion 21 a toward the distal portion 21 b. This decreases difference in rigidity between the bent portion 21 a and the distal portion 21 b in the flange portion 21. As a result, the gear plate of the second embodiment prevents uneven deformation of the ring gear 3 in a preferred manner.

### (Other Embodiments)

The gear plate according to the present invention may be embodied in the forms described below.

In the illustrated embodiments, the outer diameter of the flange portion 20, 21 becomes greater from the bent portion 20a, 21 a toward the distal portion 20b, 21 b and the inner diameter of the flange portion 20, 21 is uniform. However, the flange portion may be shaped to have a varying inner diameter.

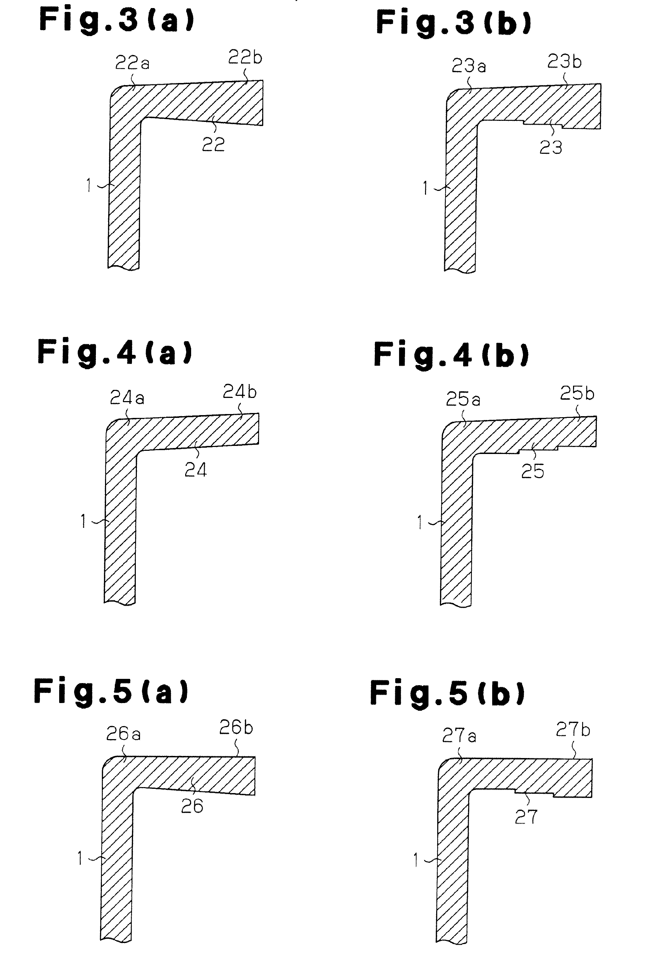

For example, in a gear plate of Modification 1 shown in Fig. 3(a), the outer diameter of a flange portion 22 becomes greater and the inner diameter of the flange portion 22 becomes gradually smaller from a bent portion 22a toward a distal portion 22b. Alternatively, in the gear plate of Modification 2 illustrated in Fig. 3(b), the inner diameter of a flange portion 23 becomes smaller in a stepped manner from a bent portion 23a toward a distal portion 23b. Also in these cases, the outer diameter of the flange portion 22, 23 becomes greater from the bent portion 22a, 23a toward the distal portion 22b and the thickness of the flange portion 22, 23 becomes greater from the bent portion 22a, 23a toward the distal portion 22b. As a result, the gear plates of Modifications 1, 2 also prevent uneven deformation of the ring gear 3 in a further preferred manner.

In the illustrated embodiments, the ring gear 3 is prevented from being unevenly deformed by setting the outer diameter and thickness of the flange portion to become greater from the bent portion toward the distal portion. However, uneven deformation of the ring gear 3 may be prevented by setting only either one of the outer diameter and the thickness of the flange portion in the above-described manner.

For example, in a gear plate of Modification 3 shown in Fig. 4(a), the outer diameter of a flange portion 24 becomes greater from a bent portion 24a toward a distal portion 24a and the inner diameter of the flange portion 24 becomes greater in the same manner. This maintains a uniform thickness of the flange portion 24. Alternatively, in a gear plate of Modification 4 shown in Fig. 4(b), the outer diameter of a flange portion 25 becomes greater from a bent portion 25a toward a distal portion 25a and the inner diameter of the flange portion 25 is increased in a stepped manner in the same direction. This maintains a substantially uniform thickness of the flange portion 25.

Also in these cases, axial variation in press-fitting interference allowance of the ring gear 3 may be employed to prevent uneven deformation of the ring gear 3 by means of the gear plates of Modifications 3, 4.

In contrast, in a gear plate of Modification 5 shown in Fig. 5(a), a flange portion 26 has a uniform outer diameter. The inner diameter of the flange portion 26 becomes smaller from a bent portion 26a toward a distal portion 26b to gradually increase the thickness of the flange portion 26. Alternatively, in a gear plate of Modification 6 illustrated in Fig. 5(b), a flange portion 27 has a uniform outer diameter but the inner diameter of the flange portion 27 becomes smaller in a stepped manner from a bent portion 27a toward a distal portion 27b. This increases the thickness of the flange portion 27 in a stepped manner. Also in these cases, the varied thicknesses cancel variation in rigidity between the bent portion 26a, 27a and the distal portion 26b, 27b. As a result, uneven deformation of the ring gear 3 is prevented in a further preferred manner also through the gear plates of Modifications 5, 6.

The gear plates of the illustrated embodiments and modifications may be embodied in the modified forms described below.

In the second embodiment, press-fitting interference allowance of the ring gear 30 becomes greater from the bent portion 21 a toward the distal portion 21 b in the flange portion 21. On the other hand, the thickness of the flange portion 21 become greater in a stepped manner from the bent portion 21 a toward the distal portion 21 b, thus increasing rigidity at the side corresponding to the distal portion 21 b. Uneven deformation of the ring gear 3 may be prevented simply by balancing rigidity. Accordingly, the gear plate may be configured such that the ring gear 3 is prevented from being unevenly deformed simply by equalizing the rigidity of the flange portion 21, with the press-fitting interference allowance of the ring gear 30 maintained to be uniform.

In the illustrated embodiment, the present invention is used in a gear plate used as a ring gear sub-assembly for a constant-meshed gear starting mechanism. However, the invention may be employed for other types of gear plates. For example, the invention is usable in a gear plate employed as a drive plate that is mounted in an engine crankshaft and transmits engine power to a transmission. In other words, as long as the gear plate in which the invention is used has a substantially disk-like plate with a flange portion that is bent in an L shape and formed along the outer peripheral edge of the plate and in which an annular ring gear is fixed to the outer circumference of the flange portion of the plate through press fitting or shrink fitting, the invention prevents uneven deformation of the ring gear in a preferred manner.

### DESCRIPTION OF THE REFERENCE NUMERALS

1...Inner Race (Plate), 2, 20, 21, 22, 23, 24, 25, 26, 27...Flange Portion (2a, 20a, 21a, 22a, 23a, 24a, 25a, 26a, 27a...Bent Portion, 2b, 20b, 21 b, 22b, 23b, 24b, 25b, 26b, 27b... Distal Portion), 3... Ring Gear

## Claims

1. A gear plate comprising:
a substantially disk-like plate;
a flange portion formed along an outer peripheral edge of the plate to be bent in an L shape; and
an annular ring gear fixed to an outer circumference of the flange portion through press fitting or shrink fitting,
wherein the flange portion is shaped such that the thickness of the flange portion becomes greater from a bent portion toward a distal portion of the flange portion.

2. The gear plate according to claim 1, wherein the flange portion is formed in a tapered shape.

3. The gear plate according to claim 1, wherein the flange portion is shaped in a stepped manner.

4. The gear plate according to any one of claims 1 to 3, wherein the outer diameter of the flange portion becomes greater from the bent portion toward the distal portion.

5. The gear plate according to any one of claims 1 to 3, wherein the outer diameter of the flange portion is uniform in the axial direction of the plate.

6. A gear plate comprising:
a substantially disk-like plate;
a flange portion formed along an outer peripheral edge of the plate to be bent in an L shape; and
an annular ring gear fixed to an outer circumference of the flange portion through press fitting or shrink fitting,
wherein the flange portion is shaped such that the outer diameter of the flange portion becomes greater from a bent portion toward a distal portion of the flange portion.

7. The gear plate according to claim 6, wherein the flange portion is formed in a tapered shape.

8. The gear plate according to claim 6, wherein the flange portion is shaped in a stepped manner.

9. The gear plate according to any one of claims 1 to 8, wherein the gear plate is a ring gear sub-assembly for a constant-mesh gear starting mechanism that is mounted in an engine crankshaft and meshed with a pinion gear of a starter motor.

10. The gear plate according to any one of claims 1 to 8, wherein the gear plate is a drive plate that is mounted in a crankshaft of an engine and transmits power of the engine to a transmission.
